(19) Europäisches Patentamt / European Patent Office / Office européen des brevets

(11) **EP 3 574 746 A1**

(12) **EUROPEAN PATENT APPLICATION**

(43) Date of publication:
**04.12.2019 Bulletin 2019/49**

(51) Int Cl.:
***A01G 15/00*** (2006.01)

(21) Application number: **18207139.9**

(22) Date of filing: **20.11.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.05.2018 KR 20180061036**

(71) Applicant: **National Institute of Meteorological Sciences**
**Seogwipo-si, Jeju-do 63568 (KR)**

(72) Inventors:
• **CHAE, Sanghee**
**63565 Jeju-do (KR)**

• **CHANG, Ki-ho**
**63569 Jeju-do (KR)**
• **KIM, Kyung-Eak**
**63126 Jeju-do (KR)**
• **JEONG, Jin-Yim**
**08700 Seoul (KR)**
• **KIM, Baek-Jo**
**63090 Jeju-do (KR)**
• **CHA, Joowan**
**63559 Jeju-do (KR)**
• **JUNG, Woonseon**
**63558 Jeju-do (KR)**

(74) Representative: **Boco IP Oy Ab**
**Itämerenkatu 5**
**00180 Helsinki (FI)**

(54) **METHOD AND SYSTEM FOR EXPRESSING AIRBORNE CLOUD SEEDING LINE CONSIDERING CLOUD WATER**

(57) Disclosed are a method and apparatus for expressing a seeding line for artificial enhancement of rain in airborne experiments considering cloud water. The method includes calculating average cloud liquid water path (LWP) for each time zone in a target region based on numerical weather prediction (NWP) model data for the target region, calculating an average wind direction and wind velocity in the target region, calculating a middle point and left and right end points of a seeding line candidate which is based on the average wind direction and wind velocity, calculating a seeding line by correcting the seeding line candidate based on a point at which cloud liquid water contents (LWC) is a maximum within upper, lower, left and right selection regions around the middle point and a height at the point, and expressing the seeding line and the height of the seeding line as an optimal seeding line and seeding height if the maximum value of the LWC is greater than 0.

```
┌─────────────────────────────────┐
│     Obtain NWP model data       │──── S100
└─────────────────────────────────┘
                │
                ▼
┌─────────────────────────────────┐
│        Set seeding time         │──── S200
└─────────────────────────────────┘
                │
                ▼
┌─────────────────────────────────┐
│        Set seeing point         │──── S300
└─────────────────────────────────┘
                │
                ▼
     No         ◇
End ◄───────  Maximum LWC > 0  ──── S400
                ◇
               │ Yes
                ▼
┌─────────────────────────────────┐
│   Express optimal seeding line  │──── S500
└─────────────────────────────────┘
```

FIG.1

**Description**

BACKGROUND OF THE INVENTION

1. Technical Field

Embodiments of the present invention relate to a technology for expressing a seeding line for artificial enhancement of rain or artificial enhancement of snow in airborne experiments in which cloud water is taken into consideration and, more particularly, to a method and system for expressing a seeding line for artificial enhancement of rain in airborne experiments in which a cloud water distribution and wind velocity using numerical weather prediction (NWP) data are taken into consideration.

2. Description of the Related Art

Today various types of unusual weather, such as a typhoon, localized heavy rain, heavy snow and drought, occur worldwide due to unusual weather phenomena attributable to a climate change. Such unusual weather causes physical and economic damages directly and indirectly.

In the case of Korea, the average annual rainfall for 10 years from 2001 to 2010 is relatively many, that is, 1410.4 mm, but this belongs to an Asia monsoon climate region in which 60% or more of the annual rainfall is concentrated on the summer season. Accordingly, it is necessary to secure water resources and there is a need for systematic management because a region and seasonal deviation in rainfall are severe and regional drought occurs in the fall and spring season due to the shortage of the amount of rainfall.

As a method for securing alternative water resources in the state in which water resources from nature have been limited, a dam construction, riverbank filtration, seawater desalination, deep sea water, artificial enhancement of rain, and artificial enhancement of snow are taken into consideration. From among them, artificial enhancement of rain or artificial enhancement of snow are taken into consideration as methods of minimizing an environmental problem attributable to development, securing water resources at a relatively low cost, and reducing drought damage.

Artificial enhancement of rain refers to a method of artificially raining by exerting some influence on cloud or rain generated by the method. Artificial enhancement of rain is a technology for making more rain by activating cloud development and water freezing through artificial cloud seeding (hereinafter referred to as "seeding") if there is a possibility that a cloud layer is formed to become rainfall, but the amount of forecast rainfall is small. Artificial enhancement of snow is substantially the same as artificial enhancement of rain except that it snows instead of rain due to a low temperature.

Experiments for artificial enhancement of rain or artificial enhancement of snow are basically divided into airborne experiments and ground experiments. Airborne experiments are known to be more effective than ground experiments. The most important thing in airborne experiments is to set a seeding line. It is effective in artificial enhancement of rain to set the seeding line at a point and height where cloud liquid water content is the greatest.

In experiments for artificial enhancement of rain, in general, a seeding line is located on the windward side and designed so that a seeding material is spread toward a target region located on the leeward side. The reason for this is that the wind field (e.g., wind direction and wind velocity) of a selected height layer needs to be taken into consideration because a seeding location is different depending on a wind field.

If a target region is restricted to a specific region due to topographical characteristics and weather conditions for experiments, experiment equipment and observation equipment for the specific region are insufficient. In this case, there is a need for an experiment design for determining a more accurate seeding line in order to increase a seeding effect of a cloud seed for the target region.

As an example of a conventional technology for solving such a problem, there is disclosed Korean Patent No. 10-1820728 (January 16, 2018) entitled "Method and system for determining conditions and heights of cloud-seeding for the regulation of winter precipitation."

However, the conventional technology provides the method and system for determining a seeding condition and seeding height available in ground and airborne experiments by taking into consideration temperature and a liquid water contents, that is, two elements directly related to a process of the nucleation of cloud ice, but has a limit to the calculation of a seeding line and seeding height for airborne experiments because a cloud water distribution according to a wind field is not taken into consideration.

SUMMARY OF THE INVENTION

The present invention has been made keeping in mind the above problems occurring in the prior art, and an object of the present invention is to provide a method and system for expressing an optimal seeding height and seeding line for airborne experiments based on wind direction and wind velocity according to a cloud liquid water path (LWP) that is average vertical integrated cloud liquid water contents (LWC) for each time zone using numerical weather prediction (NWP) data and based on points of a seeding line moved according to maximum LWC.

A method of expressing a seeding line for artificial enhancement of rain in airborne experiments according to an aspect of the present invention is a method of expressing a seeding line for artificial enhancement of rain in airborne experiments considering cloud water. The method includes calculating average cloud liquid water content (LWC) for each time zone in a target region based on numerical weather prediction (NWP) model data for the target region; calculating an average wind direction and wind velocity in the target region; setting a seeding line candidate based on the average wind direction and wind velocity; calculating a middle point and left and right end points of the seeding line candidate; calculating a seeding line by correcting the seeding line candidate based on a point at which LWC is a maximum within upper, lower, left and right selection regions around the middle point and a height at the point; and expressing the seeding line and the height of the seeding line as an optimal seeding line and seeding height if the maximum value of the LWC is a preset value or greater than 0.

In one embodiment, the method may further include setting a time zone where the cloud LWC is the maximum value as the seeding time after calculating the cloud LWC.

A system for expressing a seeding line for artificial enhancement of rain in airborne experiments according to another aspect of the present invention is a system for expressing a seeding line for artificial enhancement of rain in airborne experiments considering cloud water. The system includes a LWP calculation unit configured to calculate average cloud liquid water path (LWP) for each time zone at a target point based on numerical weather prediction (NWP) model data; a wind direction and wind velocity calculation unit configured to calculate an average wind field according to an average wind direction and wind velocity at the target point and an angle between the target point and the middle point of a seeding line in a time zone where the LWP is a maximum; a seeding line calculation unit configured to calculate the average wind direction and wind velocity at the target point, calculate the middle point and left and right end points of the seeding line, set a maximum LWC point and height within upper, lower, left and right selection regions around the middle point, and set a seeding point by moving the middle point to the maximum LWC point and moving the left and right end points; and a seeding line expression unit configured to express an optimal seeding height, a latitude and longitude of the seeding line, a position of the target point and an average wind field based on a seeding line when the maximum LWC is greater than a preset value or greater than 0.

In the present embodiments, the cloud liquid water path is corresponded to the liquid water path.

A method of expressing a seeding line for artificial enhancement of rain in airborne experiments according to yet another aspect of the present invention includes the step of obtaining numerical weather prediction (NWP) model data for a target region; a seeding time setting step of calculating an average liquid water path (LWP) for each time zone in the target region according to the NWP model data and deriving a time zone where the LWP is a maximum value; a seeding point setting step of calculating the latitudes and longitudes of the middle point and both end points of a seeding line in the target region; a maximum LWC determination step of determining maximum cloud LWC in the region of a specific distance in the left, right, upper and lower directions of the middle point of the seeding line; and a seeding line expression step of expressing a seeding line and seeding height when the maximum cloud LWC is determined to be greater than 0.

In one embodiment, in the seeding time setting step, the average LWP for each time zone may be calculated, and a time zone where the average LWP is a maximum value may be derived as a seeding time.

In one embodiment, the seeding point setting step may include calculating an average wind direction and wind velocity in the target region, calculating the middle point and left and right end points of the seeding line, setting a maximum cloud LWC point and height within left, right, upper and right selection regions around the middle point, and moving the middle point to the maximum cloud LWC point and moving the left and right end points.

In the present embodiments, the cloud liquid water contents is corresponded to the liquid water contents.

A system for expressing a seeding line for artificial enhancement of rain in airborne experiments according to further yet another aspect of the present invention includes a liquid water path (LWP) calculation unit configured to calculate an average LWP for each time zone based on numerical weather prediction (NWP) model data; a wind direction and wind velocity calculation unit configured to calculate an angle ($\theta$) between a target point and the middle point of a seeding line based on an average wind velocity and wind direction at the target point in a time zone where the LWP is a maximum; a seeding line calculation unit configured to calculate the middle point and left and right end points of the seeding line, set a maximum liquid water content (LWC) point and height within left, right, upper and right selection regions around the middle point based on a maximum LWC of LWCs used to the LWP, and set a seeding point by moving the middle point to the maximum LWC point and moving the left and right end points; and a seeding line expression unit configured to express a seeding height and the latitude and longitude of the seeding line, the location of the target point, and an average wind field based on the set seeding line.

In one embodiment, the system for expressing a seeding line for artificial enhancement of rain in airborne experiments may further include a seeding time setting unit configured to calculate the average LWP for each time zone and to derive a time zone where the LWC is a maximum value as a seeding time based on the average LWP.

In one embodiment, the system for expressing a seeding line for artificial enhancement of rain in airborne experiments may further include a seeding point setting unit configured to calculate an average wind direction and wind velocity in the target region, calculate the middle point and left and right end points of the seeding line, set a maximum LWC point and height within the left, right, upper and right selection regions around the middle point, and move the middle point to the maximum LWC point and move the left and right end points.

BRIEF DESCRIPTION OF THE DRAWINGS

FIG. 1 is a flowchart illustrating a method of expressing a seeding line for artificial enhancement of rain in airborne experiments in which cloud water is taken into consideration according to an embodiment of the present invention.
FIG. 2 is a flowchart for illustrating a detailed process of a seeding point setting step in the method of expressing a seeding line shown in FIG. 1.
FIG. 3 is an exemplary diagram for illustrating a process of calculating an average wind field and angle in the seeding point setting step of FIG. 2.
FIG. 4 is an exemplary diagram illustrating the latitude and longitude based on the middle point A and both end points B and C of a seeding line candidate within a target region in the seeding point setting step of FIG. 2.
FIG. 5 is an exemplary diagram for illustrating a process of setting a point indicative of maximum LWC according to the embodiment of FIG. 2.
FIG. 6 is a diagram illustrating the results of the expression of a seeding line and height at a target point through a seeding line expression process in the method of expressing a seeding line shown in FIG. 1.
FIG. 7 is a schematic diagram showing a system for expressing a seeding line for artificial enhancement of rain in airborne experiments in which cloud water is taken into consideration according to another embodiment of the present invention.
FIG. 8 is a block diagram for illustrating elements which may be added to the system for expressing a seeding line shown in FIG. 7.

DETAILED DESCRIPTION

Terms or words used in the specification should not be construed as having common or dictionary meanings, but should be construed as having meanings and concepts that comply with the technological spirit of the present invention based on the principle that the inventor may appropriately define the terms or words as concepts for describing them in such a way as to best describe his or her invention.

Accordingly, elements described in the embodiments and shown in drawings of the specification are only the most preferred embodiments of the present invention and do not fully represent the technical spirit of the present invention. Accordingly, it should be understood that a variety of equivalents and modifications capable of substituting the embodiments at the time of filing of this application may be present.

In this specification, clouds refer to a phenomenon in which water drops (small water drops) or ice crystals congealed or sublimated from vapor having a maximum vapor amount (saturated vapor pressure, relative humidity 100%) or more that may be included in the atmosphere due to a drop in temperature or the supply of vapor are grouped together and floated in the atmosphere. Such clouds are composed (cloud state) of water drops, ice crystals or a mixture of the two types depending on the temperature of clouds. The size of clouds (cloud cover) is determined by the size of a supersaturated region.

Furthermore, if the atmosphere is relatively stable when clouds are formed, the clouds may be widely spread and formed (i.e., stratiform cloud). If the atmosphere is very unstable when clouds are formed, clouds developed in the perpendicular direction (i.e., cumuliform cloud) may be formed. Clouds are classified into upper clouds, middle clouds and lower clouds depending on heights at which such clouds are formed. Clouds have different influences on weather and climates, such as a radiation budget and rainfall, depending on their characteristics (cloud designs, a cloud state, a cloud cover and an optical thickness). Accordingly, there is a need for quantitative information about the horizontal volume of clouds (i.e., cloud cover), the type of particles forming clouds (i.e., cloud state), and the kind (i.e., cloud designs) and height of cloud. A process of calculating such information is cloud analysis.

Cloud analysis prior to satellite observation was chiefly performed by the eyes of a person on the ground through the observation of a form under clouds. A weather satellite located between several hundreds of km over the earth to 36,000 km observes the upper part of clouds unlike a person. However, the weather satellite cannot analyze a detailed form of clouds unlike in terrestrial observation because spatial and spectral resolution (VIS about 1km, IR about 4 km) of a sensor mounted on the satellite is relatively lower than that of the eyes of a person. That is, the eyes of a person has an advantage in that they can see the lower part of clouds in detail with respect to a relatively narrow region, whereas the satellite has an advantage in that it can observe the properties of the upper part of clouds quantitatively and objectively with respect to a wide region (the inside of clouds can also be observed if a microwave channel is used). As described above, it should be noted that cloud information analyzed using satellite data is basically different from a cloud information form through terrestrial observation.

In the following description, artificial enhancement of rain may be used as a term or expression representative of artificial rainfall, artificial snowfall and artificial enhancement of snow. Furthermore, an expression method may be an expression representative of a calculation method or a calculation and expression method. An expression system may be an expression representative of a calculation system or a calculation and expression system.

Hereinafter, embodiments of the present invention are described in detail with reference to the accompanying drawings.

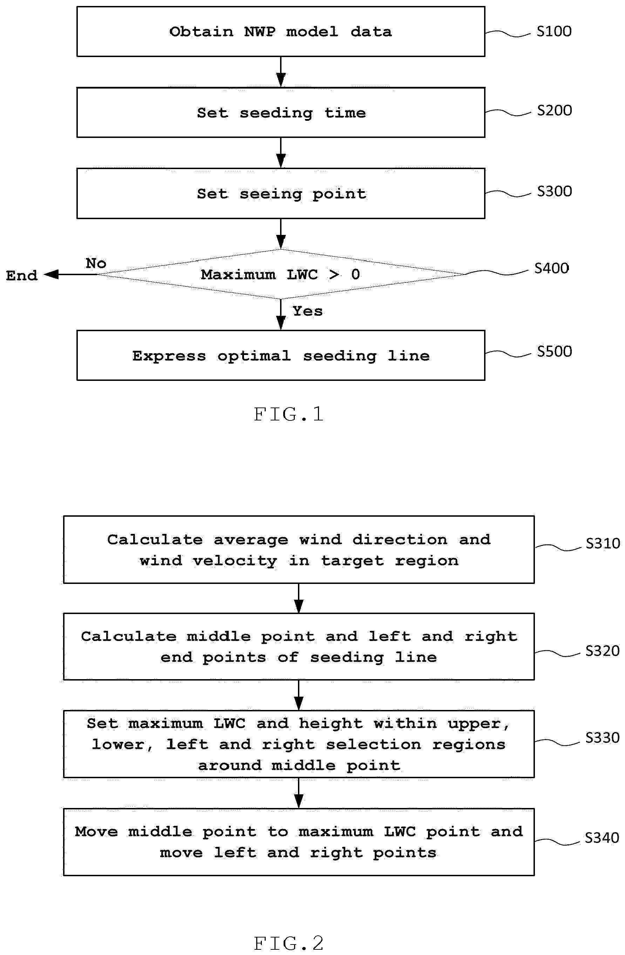

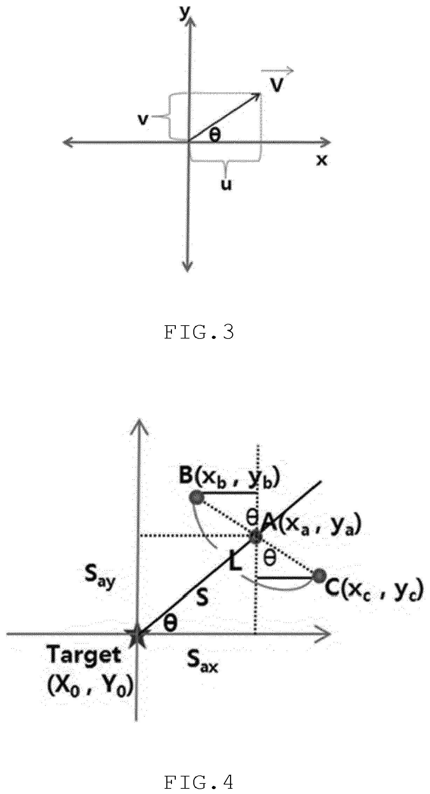

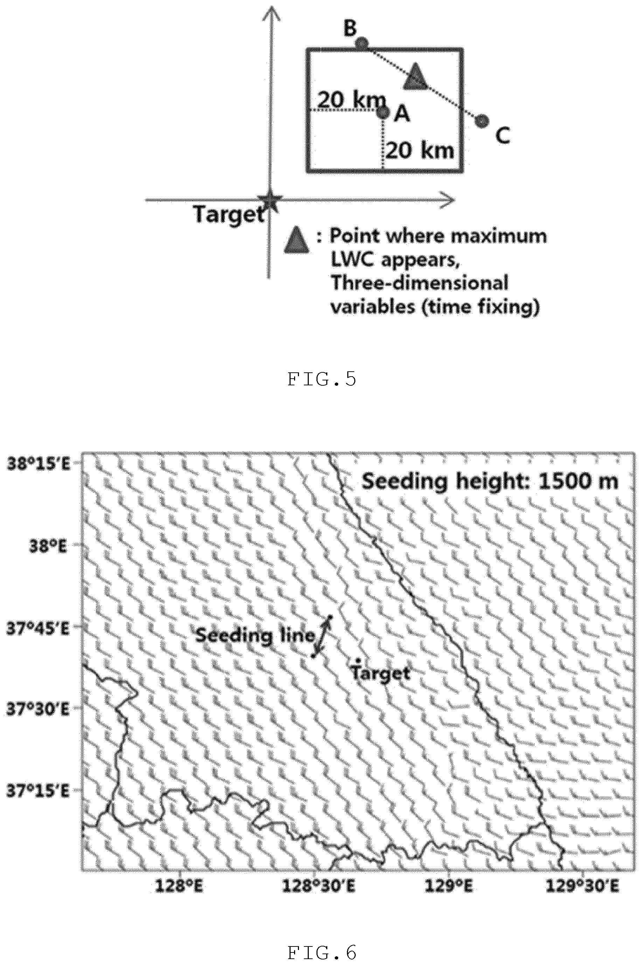

FIG. 1 is a flowchart illustrating a method of expressing a seeding line for artificial enhancement of rain in airborne experiments in which cloud liquid water content (LWC) is taken into consideration according to an embodiment of the present invention. FIG. 2 is a flowchart for illustrating a detailed process of a seeding point setting step in the method of expressing a seeding line shown in FIG. 1. FIG. 3 is an exemplary diagram for illustrating a process of calculating an average wind field and angle in the seeding point setting step of FIG. 2. FIG. 4 is an exemplary diagram illustrating the latitude and longitude based on the middle point A and both end points B and C of a seeding line candidate within a target region in the seeding point setting step of FIG. 2. FIG. 5 is an exemplary diagram for illustrating a process of setting a point indicative of maximum LWC according to the embodiment of FIG. 2. FIG. 6 is a diagram illustrating the results of the expression of a seeding line and height at a target point through a seeding line expression process in the method of expressing a seeding line shown in FIG. 1.

Referring to FIG. 1, the method of expressing a seeding line for artificial enhancement of rain in airborne experiments according to the present embodiment includes a first step S100 of obtaining numerical weather prediction (NWP) model data, a second step S200 of setting a seeding time, a third step S300 of setting a seeding point, and a fourth step S500 of expressing a current seeding line as an optimal seeding line when maximum liquid water content (LWC) is greater than 0 (S400). When the maximum LWC is 0 or less in step S400, this process may be terminated.

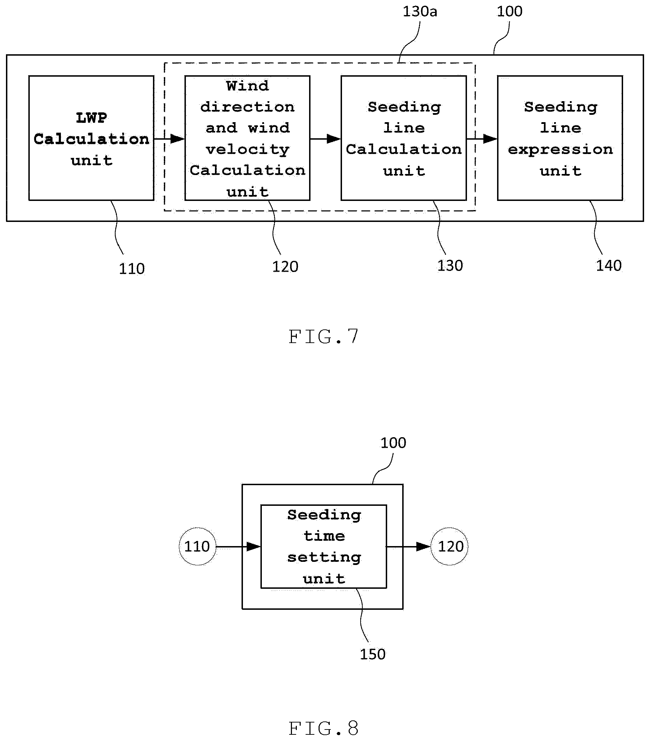

The first step S100 may be implemented by a cloud water calculation unit (refer to FIG. 7) or means or an element performing the same function as the cloud water calculation unit. The second step S200 may be implemented by a seeding time setting unit (refer to FIG. 8) or means or an element performing the same function as the seeding time setting unit. The third step S300 may be implemented by a combination of a wind direction and wind velocity calculation unit and a seeding line calculation unit (refer to FIG. 7) or at least one means or element performing the same function as the combination. The fourth step (S400, S500) may be implemented by a seeding line expression unit (refer to FIG. 7) or means or an element performing the same function as the seeding line expression unit.

Each of the elements is described more specifically below. In the first step S100, the results of NWP model data with detailed resolution may be obtained by performing non-seeding numerical experiments on a target region. Step S100 may be performed to calculate average cloud liquid water path (LWP) for each time zone of a target region based on NWP model data for the target region. Furthermore, step S100 may be performed to obtain the results of a regional numerical-weather prediction model with high resolution using synoptic observation data, that is, ground and high layer observation data, and non-synoptic observation data obtained through a weather satellite and weather radar as input data.

Numerical weather prediction (NWP) may be defined as a series of processes of analyzing a current atmosphere state by numerically integrating governing equations regarding the dynamics and physical principle of an atmosphere phenomenon consecutively using a computer and also predicting a future atmosphere state quantitatively. NWP may include a global data assimilation and prediction system using a global model and a regional data assimilation and prediction system using a regional model in each country. The global data assimilation and prediction system may perform prediction or a global atmosphere flow for forecast. The regional data assimilation and prediction system may perform detailed prediction for an atmospheric system that affects a specific region, for example, East Asia, the Korean Peninsula, and the South Korea region. Furthermore, the type of NWP model includes a climate model, a middle-scale model, a specialized model, and a synoptic model for work-site operations.

In the NWP model, a main limit to the modeling of the atmosphere is that a computer must be used. The atmosphere in the model needs to be structured so that it can be processed using a computer program. In order to achieve such an object, the atmosphere may be based on a grid system, and air may be divided into a hexahedron or air parcel. Furthermore, atmosphere properties in the hexahedron may be materialized as if observation is performed in the actual atmosphere. Furthermore, a movement of air within the hexahedron may be set to be performed by the sum of all of forces that affect air. Furthermore, element values, such as a temperature, atmospheric pressure and specific humidity (the mass ratio of vapor included in air of unit mass) designated in each air parcel, mean an average value or representative value of the corresponding air parcel, and may be set to vary over time depending on a given law of physics.

The second step S200 may be performed to set a proper seeding-possible time in the target region based on the NWP model data as a time zone where a maximum value of cloud liquid water path (LWP) for each time zone appears.

The cloud liquid water path or a liquid water path (LWP) may be corresponded to the perpendicular integration of a cloud liquid water contents or a liquid water contents (LWC). That is, the LWP means the sum of perpendicularly accumulated the LWC in the target region.

The LWP may be expressed and calculated by the LWP calculation unit 110 like Equation 1.

【Equation 1】

$$\text{LWP} = \sum_{i=1}^{n} \rho_{air}(i)\, Q_c(\mathrm{i}) \Delta z(i)$$

In Equation 1, the unit of the LWP is [g/m2], i is a perpendicular height level of a model, $\rho_{air}$ is density of dry air (kg/m3), $Q_c$ is a mixture ratio (g/kg) of cloud water, and $\Delta z$ is a height difference in each perpendicular layer of a model.

As described above, in the method of the present embodiment, a mixture ratio of density of dry air and cloud water may be calculated from the results of the model in the first step S100. Furthermore, in the second step S200, a time zone where the maximum value of the LWP for each time zone appears may be set as a seeding time.

In the third step S300, in order to set a seeding point, a cloud water distribution and wind velocity using the NWP model data are used. More specifically, referring to FIG. 2, the third step S300 may include calculating an average wind direction and wind velocity in the target region based on the NWP model data (S310), calculating the middle point A and left and right end points B and C of a seeding line candidate which is based on the calculated average wind direction and wind velocity (S320), setting a point indicative of maximum LWC and height at the point within upper, lower, left and right selection regions around the middle point A (S330), and moving the middle point A to the maximum LWC point and moving the left and right end points B and C in response to the movement of the middle point (S340).

In step S310 of calculating the average wind direction and wind velocity of the target region, a wind field according to the average wind direction and wind velocity of the target region in a time zone where the LWP derived through Equation 1 is a maximum may be calculated. In the wind field, the wind direction may be calculated as angle (θ) between the target region and the middle point of the seeding line.

Some process of the third step of the present embodiment may be implemented to calculate an average wind direction and wind velocity of the target region up to 3 km at the height 400m of the time zone where the LWP derived through Equation 1 is a maximum.

For example, this is described more specifically below with reference to the exemplary diagram of FIG. 3 showing an angle (θ) between an average wind velocity ($\overline{V}$) and a wind direction according to the present embodiment.

The average wind velocity ($\overline{V}$) may be expressed and calculated like Equation 2 based on the results obtained from the NWP model data.

【Equation 2】

$$\overline{V} = \sqrt{\overline{u^2} + \overline{v^2}}$$

In Equation 2, the unit of the average wind velocity is [m/s], u is a wind component in the east-west direction (x), and v is a wind component in the north-south direction (y).

Referring to Equation 2 and FIG. 3, the angle (θ) between the target region and the middle point of the seeding line is determined. The angle (θ) may be expressed and calculated like Equation 3.

【Equation 3】

$$\theta = \begin{cases} \tan^{-1}\dfrac{y}{x} & x > 0 \\[2mm] \tan^{-1}\dfrac{y}{x} + \pi & y \geq 0, x < 0 \\[2mm] \tan^{-1}\dfrac{y}{x} - \pi & y < 0, x < 0 \\[2mm] +\dfrac{\pi}{2} & y > 0, x = 0 \\[2mm] -\dfrac{\pi}{2} & y < 0, x = 0 \\[2mm] undefined & y = 0, x = 0 \end{cases}$$

When the angle ($\theta$) is determined, a seeding line candidate may be set based on the determined angle ($\theta$).

Thereafter, as shown in FIG. 4, the middle point A and left and right end points B and C of the seeding line candidate may be calculated. In this case, the latitude and longitude of each of the points A, B and C of the seeding line candidate may be calculated.

Next, a distance (S) between the target region and the middle point A of the seeding line candidate may be calculated using the average wind velocity ($\overline{V}$) obtained in the step of calculating the average wind direction and wind velocity of the target region.

The distance (S) may be expressed and calculated like Equation 4.

【Equation 4】
$$S = \overline{V} \times (R_t \times 60\,s\,min^{-1})$$

In Equation 4, $R_t$ is the time taken for rainfall to fall due to a seeding material (i.e., response time). The response time may be set by a user by inputting a numerical value of a minute unit.

Furthermore, the latitudes and longitudes of the middle point A and both end points B and C for the seeding line candidate may be calculated according to [Equations] below.

[Equations]

$$S_{ax} = S \times \cos\theta, S_{ay} = S \times \sin\theta,$$

$$R_0(x_a - x_0) = S_{ax}, R_0(y_a - y_0) = S_{ay}$$

Longitude
∴ of point A $x_a = \frac{S_{ax}}{R_0} + x_0$, Latitude $y_a = \frac{S_{ay}}{R_0} + y_0$

$$S_{by} = \frac{L}{2} \times \cos\theta, S_{bx} = \frac{L}{2} \times \sin\theta$$

$$S_{cy} = \frac{L}{2} \times \cos\theta, S_{cx} = \frac{L}{2} \times \sin\theta$$

$$R_0(x_a - x_b) = S_{bx}, R_0(y_a + y_b) = S_{by}$$

$$R_0(x_a + x_c) = S_{bx}, R_0(y_a - y_c) = S_{cy}$$

Longitude
∴ of point B $x_b = x_a - \frac{S_{bx}}{R_0}$, Latitude $y_b = y_a + \frac{S_{by}}{R_0}$

Longitude
∴ of point C $x_c = x_a + \frac{S_{cx}}{R_0}$, Latitude $y_c = y_a - \frac{S_{cy}}{R_0}$

In Equations, $R_0$ is the radius (m) of the earth, $x_0$ and $y_0$ are the height ($y_0$) and longitude ($x_0$) of the target region, $x_a$ and $y_a$ are the longitude and latitude of the point A, $x_b$ and $y_b$ are the longitude and latitude of the point B, and $x_c$ and $y_c$ are the longitude and latitude of the point C. Furthermore, $S_{ax}$ is the distance in the east-west direction for the point A, and $S_{ay}$ is the distance in the north-south direction for the point A. Furthermore, L is a total distance of the seeding line.

Next, a point indicative of maximum LWC within upper, lower, left and right selection regions around the middle point A and height at the point may be calculated. A condition for the seeding line candidate may be set again based on the calculated point and height.

Such correction of the condition for the seeding line candidate may be implemented so that a seeding height is set as the height where LWC is a maximum by searching for the maximum LWC point in the left, right, upper and lower directions of the middle point A of the seeding line and moving the middle point A to the retrieved maximum LWC point.

To this end, LWC according to each height level may be calculated according to Equation 5.

【Equation 5】

$$LWC = \rho_{air}(i) \times Q_c(i)$$

In Equation 5, the unit of LWC is [g/m3], i is a perpendicular height level of a model, $\rho_{air}$ is density (kg/m3) of dry air, and $Q_c$ is a mixture ratio of cloud water.

In general, if LWC is greater than 0, it may be said to be clouds having a sufficient LWP. However, such a value may be different depending on the climatic characteristics of clouds generated in a corresponding region.

As described above, to move the middle point A to the maximum LWC point and thus move the left and right end points B and C are for searching for a point indicative of maximum LWC within a 20km region in the left, right, upper and lower directions of the middle point A of the seeding line, setting the retrieved point as a middle point A again, and thus setting a seeding height as a height layer where LWC is a maximum, as shown in FIG. 5 in the method according to the present embodiment.

In this case, the target region, that is, regions extended 20km in the left, right, upper and lower directions, respectively, from the middle point A of the seeding line may be changed and adjusted depending on the setting of a user.

Furthermore, when the middle point moves, the point B and the point C of the seeding line may also be moved to locations calculated according to [Equations].

In this case, if a maximum LWC value is zero (0), the middle point A of the seeding line and both end points B and C calculated according to [Equations] may maintain right-before points without being moved.

As described above, the process of setting a seeding point according to the present embodiment includes calculating the latitudes and longitudes of the middle point A and both end points B and C of the seeding line, but may include moving a point indicative of maximum LWC to the middle point A of the seeding line and calculating the middle point and both end points of an optimal seeding line.

In the fourth step, whether the maximum LWC is greater than 0 may be determined (S400). If the maximum LWC is greater than 0, a current seeding line and height may be calculated as an optimal seeding line and height and may be expressed (S500).

The step S500 of expressing a seeding line is a process of expressing both end points B and C and the seeding height of the seeding line calculated through the aforementioned process, and may be implemented to also express a wind field at a height calculated as a seeding height in the expression step of the present embodiment.

In accordance with the seeding line expression process, as shown in FIG. 6, the location of a target region and the seeding line and seeding height of the target region may be expressed, and a seeding height and the latitude and longitude of the seeding line may be expressed.

FIG. 7 is a schematic diagram showing a system for expressing a seeding line for artificial enhancement of rain in airborne experiments in which cloud LWC is taken into consideration according to another embodiment of the present invention. FIG. 8 is a block diagram for illustrating elements which may be added to the system for expressing a seeding line shown in FIG. 7.

Referring to FIG. 7, the system 100 for expressing a seeding line for artificial enhancement of rain in airborne experiments according to the present embodiment includes a cloud liquid water path (LWP) calculation unit 110, a wind direction and wind velocity calculation unit 120, a seeding line calculation unit 130, and a seeding line expression unit 140. The LWP calculation unit 110 corresponds to an LWP calculation unit. The seeding line calculation unit 130 may include means for performing the functions of a seeding time setting unit and a seeding point setting unit or an element performing a function corresponding to such means.

Each of the elements is described more specifically below. In the system for expressing a seeding line for artificial enhancement of rain in airborne experiments, the LWP calculation unit 110 may calculate an average perpendicular-accumulated LWP for each time zone in a target region based on NWP model data. The perpendicularly accumulated LWP may be calculated through the accumulation of LWC.

The wind direction and wind velocity calculation unit 120 may calculate the angle ($\theta$) between a target point and the middle point of a seeding line at an average wind direction and wind velocity of the target point in a time zone where perpendicularly accumulated LWP is a maximum.

The seeding line calculation unit 130 may calculate an average wind direction and wind velocity at a target point (Target), may calculate the middle point and left and right end points of a seeding line, may set a maximum LWC point and height within the left, right, upper and lower selection regions of the middle point, and may move the middle point to the maximum LWC point and move the left and right end points so that an optimal seeding point is selected.

The seeding line expression unit 140 may be configured to display calculation information, including an optimal prediction seeding height, the latitude and longitude of a seeding line, the location of a target point, and an average wind field, on a display. The seeding line expression unit 140 is not limited to the display of information calculated in the present embodiment, and may be designed by a user so that various functions is added thereto.

A seeding time setting unit 150 configured to set a time zone where a maximum value of an average LWC or LWP for each time zone appears as a seeding time may be further included between the LWP calculation unit 110 and the wind direction and wind velocity calculation unit 120. Furthermore, a combination of the wind direction and wind velocity calculation unit 120 and the seeding line calculation unit 130 is called a seeding point setting unit 130a, and may correspond thereto.

The LWP calculation unit 110, wind direction and wind velocity calculation unit 120, seeding line calculation unit 130, seeding line expression unit 140 and seeding time setting unit 150 of the system 100 for expressing a seeding line for artificial enhancement of rain in airborne experiments according to the present embodiment are implemented by a hardware device or computing device. They may be implemented in the form of program instructions capable of being executed through various computer means, such as at least one software module, and may be recorded on a computer-readable medium.

In this case, the hardware device or computing device may include a processor or memory. The processor may be called a controller or a control device. The controller or control device may be included as at least some elements of the processor or may be included as at least some elements of the processor.

The software module may be stored in a separate computer-readable medium (recording medium) in a program or software form, may be loaded or mounted on the computing device if necessary, and may be implemented to perform a corresponding function in response to instructions from a signal processor or information processor.

The computer-readable medium may include program instructions, a data file and/or a data structure solely or in combination. The program recorded on the computer-readable medium may be designed and constructed particularly for the present invention, or may be known and available to those skilled in the field of computer software. The program instructions may include not only machine language code that is constructed by a compiler, but high-level language code that can be executed by a computer using an interpreter or the like. The computer-readable medium may include hardware devices particularly configured to store and execute program instructions, such as ROM, RAM, and flash memory.

In accordance with the aforementioned embodiments, an optimal seeding line and height for airborne experiments can be calculated so that the seeding line is located at the point and height layer where cloud water is most present because cloud liquid water path (LWP) is calculated based on NWP model data or calculated based on an average LWP for each time zone.

Furthermore, in accordance with the present invention, an optimal seeding height for airborne experiments, the latitude and longitude of the seeding line, the position of a target point and an average wind field can be expressed by taking into consideration a cloud water distribution and wind velocity using NWP data. Accordingly, there are effects in that the present invention can greatly contribute to airborne experiments for artificial enhancement of rain and a calculated seeding line can be used to construct actual experiments or an actual data assimilation and prediction system.

The preferred embodiments of the present invention have been described in the detailed description of the present invention with reference to the accompanying drawings, but they are only illustrative. Those skilled in the art may understand that the present invention may have various modifications and equivalent embodiments. Accordingly, the true range of protection of the present invention should be determined by the following claims.

**Claims**

1. A method of expressing a seeding line for artificial enhancement of rain in airborne experiments considering cloud water, the method comprising:

   calculating average cloud liquid water path (LWP) for each time zone in a target region based on numerical weather prediction (NWP) model data for the target region;
   calculating an average wind direction and wind velocity in the target region based on the NWP model data;
   calculating a middle point and left and right end points of a seeding line candidate which is based on the average wind direction and wind velocity;
   calculating a seeding line by correcting the seeding line candidate based on a point at which a cloud liquid water contents (LWC) is a maximum within upper, lower, left and right selection regions around the middle point and a height at the point; and
   expressing the seeding line and the height of the seeding line as an optimal seeding line and seeding height if the maximum value of the LWC is a preset value or greater than 0.

2. The method of claim 1, further comprising setting a time zone where the LWP is the maximum value as the seeding time after calculating the average LWP.

3. A system for expressing a seeding line for artificial enhancement of rain in airborne experiments considering cloud water, the system comprising:

   a liquid water path (LWP) calculation unit configured to calculate average cloud liquid water content (LWP) for each time zone at a target point based on numerical weather prediction (NWP) model data;
   a wind direction and wind velocity calculation unit configured to calculate an average wind field according to an average wind direction and wind velocity at the target point and an angle between the target point and a middle point of a seeding line in a time zone where the LWP is a maximum;
   a seeding line calculation unit configured to calculate the average wind direction and wind velocity at the target point, calculate the middle point and left and right end points of the seeding line, set a maximum LWC point and height within upper, lower, left and right selection regions around the middle point, and set a seeding point by moving the middle point to the maximum LWC point and moving the left and right end points; and
a seeding line expression unit configured to express an optimal seeding height, a latitude and longitude of the seeding line, a position of the target point and an average wind field based on a seeding line when the maximum LWC is greater than a preset value or greater than 0.

Obtain NWP model data — S100

Set seeding time — S200

Set seeing point — S300

No ← End    Maximum LWC > 0 — S400

Yes

Express optimal seeding line — S500

FIG.1

Calculate average wind direction and wind velocity in target region — S310

Calculate middle point and left and right end points of seeding line — S320

Set maximum LWC and height within upper, lower, left and right selection regions around middle point — S330

Move middle point to maximum LWC point and move left and right points — S340

FIG.2

FIG.3

FIG.4

FIG.5

FIG.6

FIG.7

FIG.8

Europäisches
Patentamt

European
Patent Office

Office européen
des brevets

# EUROPEAN SEARCH REPORT

Application Number

EP 18 20 7139

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KR 101 566 381 B1 (KOREA METEOROLOGICAL ADMINISTRATION [KR]) 9 November 2015 (2015-11-09) * paragraphs [0011] - [0014], [0040] - [0042], [0052] - [0061]; figures 1,2 * | 1-3 | INV. A01G15/00 |
| Y | KR 101 820 728 B1 (KOREA METEOROLOGICAL ADMINISTRATION [KR]) 28 February 2018 (2018-02-28) * paragraphs [0012] - [0020], [0030], [0047] * | 1-3 | |
| A | DEFELICE T P ET AL: "Modern and prospective technologies for weather modification activities: Developing a framework for integrating autonomous unmanned aircraft systems", ATMOSPHERIC RESEARCH, ELSEVIER, AMSTERDAM, NL, vol. 193, 12 April 2017 (2017-04-12), pages 173-183, XP085022216, ISSN: 0169-8095, DOI: 10.1016/J.ATMOSRES.2017.04.024 * paragraph [0004] * | 1-3 | |

TECHNICAL FIELDS
SEARCHED      (IPC)

A01G
G01W

The present search report has been drawn up for all claims

| Place of search | Date of completion of the search | Examiner |
|---|---|---|
| The Hague | 28 May 2019 | de Bakker, Michiel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 20 7139

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2019

| Patent document cited in search report | | Publication date | Patent family member(s) | Publication date |
|---|---|---|---|---|
| KR 101566381 | B1 | 09-11-2015 | NONE | |
| KR 101820728 | B1 | 28-02-2018 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101820728